# EUROPEAN PATENT SPECIFICATION

(11) **EP 4 018 817 B1**
(45) Date of publication and mention of the grant of the patent: **19.11.2025**
(21) Application number: 21217053.4
(22) Date of filing: 22.12.2021
(51) Int. Cl.: A01G 9/24, A01G 31/06

(54) **PLANT CULTIVATION APPARATUS**
PFLANZENZUCHTVORRICHTUNG
APPAREIL DE CULTURE DE PLANTES

(30) Priority: 22.12.2020 KR 20200181110
(43) Date of publication of application: 29.06.2022
(73) Proprietor: LG Electronics Inc., Seoul 07336 (KR)
(72) Inventor: Yoo, Imsung, Seoul 08592 (KR)
(74) Representative: Frenkel, Matthias Alexander

(56) References cited:
- KR-A- 20030 084 609
- KR-B1- 101 402 782

## Description

### BACKGROUND OF THE DISCLOSURE

### Field of the Disclosure

The present disclosure relates to a plant cultivation apparatus, and more specifically, to a plant cultivation apparatus including a water supply supplying water to a top of a cultivator.

### Discussion of the Related Art

A plant cultivation apparatus refers to an apparatus capable of plant cultivation by artificially supplying light energy, moisture, soil, and temperature necessary for plant growth. The plant cultivation apparatus has a predetermined cultivation space defined therein having an environment suitable for plant growth, and cultivates and stores the plant in the predetermined cultivation space.

Further, the plant cultivation apparatus may include components for supplying moisture and nutrients necessary for plant growth. Further, the plant cultivation apparatus may include a component for artificially supplying light energy. Thus, the plant cultivated in the plant cultivation apparatus may be artificially supplied with light energy from the plant cultivation apparatus while not receiving light irradiated from the sun outside the plant cultivation apparatus.

Accordingly, a user may not periodically supply moisture or nutrient in a cultivation operation process of the plant. The plant cultivated in the plant cultivation apparatus grows upon receiving the nutrient, moisture and light energy supplied from the plant cultivation apparatus.

A scheme of cultivating a plant includes a soil-based cultivation scheme of planting a plant in soil that supplies nutrients and moisture to the plant, and a water-based cultivation scheme for cultivating a plant by supplying to the plant a cultivation medium in which inorganic nutrients necessary for growth are dissolved in water, instead of using soil.

In this connection, there may be organisms that adversely affect the plant in the soil. Since this water-based cultivation scheme does not use the soil, the plant is not affected by the organisms and may be more hygienic in the water-based cultivation scheme than in the soil-based cultivation scheme.

The water-based cultivation scheme is more hygienic than the soil-based cultivation scheme using soil is, and may be less affected by weather and season. Thus, the water-based cultivation scheme may create a more favorable growth condition than the soil-based cultivation scheme may.

Further, in order for the plant cultivation apparatus to artificially supply nutrients, water, and light energy to the plant to be used indoors, the water-based cultivation scheme may be more advantageous than the soil-based cultivation scheme using soil.

Further, a hydroponic water-based cultivation scheme as one of the water-based cultivation schemes refers to a cultivation scheme in which the plant is cultivated so that the roots thereof are received in nutrient liquid and a stem and leaves of the plant are grown in a space above the nutrient liquid.

Korean Patent Application Publication No. 10-2012-0060087 discloses a hydroponic water-based cultivation scheme for supplying moisture necessary for a plant to a location below the plant. However, the plant cultivation apparatus disclosed in Korean Patent Application Publication No. 10-2012-0060087 cultivates a plant in a hydroponic water-based cultivation scheme, and thus supplies a cultivation medium only to a location below the plant, so that a germination rate of the plant is not constant according to the water-level of the cultivation medium or the growth of the plant is poor. Further, when the plant is harvested, the cultivation medium is exposed to the user, thereby causing inconvenience to the user.

Further, Korean Patent Application Publication No. 10-2012-0138947 discloses a plant cultivation apparatus for supplying water to a location below the plant and evenly maintaining a pressure generated when the supplied water comes into contact with the plant.

However, in the plant cultivation apparatus as disclosure in Korean Patent Application Publication No. 10-2012-0138947, the roots of the plant are always contained in the cultivation medium, resulting in poor germination rate and growth of the plant.

Therefore, it is an important task in this technical field to design a plant cultivation apparatus that increases a plant germination rate and lowers a failure of plant growth even under the cultivation process according to the hydroponic water-based cultivation scheme (hereinafter, bottom-up water supply scheme).

### Prior art literature

### Patent Literature

Patent Document 1: Korean Patent Laid-Open Publication No. 10-2012-0060087A (2012.06.11.)
Patent Document 2: Korean Patent Laid-Open Publication No. 10-2012-0138947A (2012.12.27.)

KR 101 402 782 B1 relates to a plant grower capable of effectively cultivating a plant with a small amount of a culture medium, supplying a culture medium evenly to each plant, and designing a light weight. The plant grower has a cover water channel communicating with an inside of a cultivator thereof.

### SUMMARY OF THE DISCLOSURE

Embodiments of the present disclosure intend to provide a plant cultivation apparatus that supplies water to the plant efficiently through a top-down water supply scheme that supplies water to the top of the cultivator and supplies water to the top of the cultivation medium.

Further, embodiments of the present disclosure intend to provide a plant cultivation apparatus that increases a germination rate of a plant and reduces the growth failure via uniform water supply to the cultivation medium.

Further, embodiments of the present disclosure intend to provide a plant cultivation apparatus constructed to enable smooth respiration and nutrient absorption of roots by supplying water to a top of the cultivation medium in which the plant is received.

Further, embodiments of the present disclosure intend to provide a plant cultivation apparatus that increases a germination rate of a plant by feeding sufficient moisture to the seeds of the plant.

Further, embodiments of the present disclosure intend to provide a plant cultivation apparatus in which the water stored inside the cultivator is prevented from being exposed outwardly and thus coming into contact with the user during harvesting of the plant.

Further, embodiments of the present disclosure intend to provide a plant cultivation apparatus that minimizes generation of pollutants inside the cultivator via a top-down water supply mode.

It is an object of the present invention to provide a plant cultivation apparatus that efficiently supplies water to a plant. This object is solved by the present invention as defined in the independent claim. Preferred embodiments are defined in the dependent claims.

In order to better understand the present disclosure, aspects of the present disclosure provide a plant cultivation apparatus including a cabinet, a bed, a cultivator, a cover water channel and a water supply.

Specifically, the bed is disposed inside the cabinet. The cultivator is seated on the bed and is constructed to receive therein a cultivation medium containing therein at least a portion of the plant. The cultivator comprises a cultivation vessel seated on the bed and having an open top, and a cover shielding the open top of the cultivation vessel. The cover water channel is defined in a top face of the cultivator, specifically in a top face of the cover, and the water to be supplied to the plant is received in the cover water channel. The water supply is disposed inside the cabinet, and at least a portion thereof is located above the cover water channel to supply water to the cover water channel.

The cover water channel communicates with the inside of the cultivator, so that the water supplied from the water supply is guided through the cover water channel to the cultivation medium.

In the plant cultivation apparatus, the cultivator includes a cultivation vessel and a cover. The cultivation vessel is seated on the bed and has an open top. The cover may be constructed to block the open top of the cultivation vessel. The cover water channel is defined in the top face of the cover.

The cover is disposed in a position corresponding to that of the cultivation medium and includes a cultivation medium receiving portion into which an upper end of the cultivation medium is inserted. The cover water channel may be constructed to overlap with at least a portion of the cultivation medium receiving portion. The cultivation medium receiving portion may be constructed to have a first inflow hole for supplying water from the cover water channel to the cultivation medium.

The cover water channel may include a first cover water channel and a second cover water channel. The first cover water channel may extend from one side of the cover to the opposite side thereof. The second cover water channel may branch from the first cover water channel.

The cultivation medium may include a plurality of cultivation mediums, and the cultivation medium receiving portion may include a plurality of the cultivation medium receiving portions. The plurality of cultivation medium receiving portions may be positioned inside the first cover water channel and the second cover water channel.

The cover water channel is defined by recessing a portion of a top face of the cover, wherein the cultivation medium receiving portion protrudes upwardly from a bottom face of the cover water channel while being disposed in the cover water channel.

The cultivation medium receiving portion is positioned within the cover water channel and is constructed to be surrounded with water received in the cover water channel, wherein the first inflow holes are arranged around the cultivation medium receiving portion.

The cultivation medium is inserted into the cultivation medium receiving portion and is brought into contact with an inner side face of the cultivation medium receiving portion, wherein the first inflow hole is defined in the inner side face to guide the water received in the cover water channel to the cultivation medium.

The first inflow hole is positioned so as to be in contact with a bottom face of the cover water channel. The water received in the cover water channel may flow into the first inflow hole.

A portion of a sidewall of the cover water channel facing toward the cultivation medium receiving portion is horizontally recessed so as be away from the cultivation medium receiving portion. The cover water channel includes a second inflow hole communicating with the inside of the cultivation vessel, wherein a cover through-hole through which the plant grows and extends is defined in a top face of the cultivation medium receiving portion.

A vertical level of the second inflow hole is lower than a vertical level of the cover through-hole such that water in the cover water channel is prevented from flowing into the cover through-hole.

The cover water channel includes a protrusion protruding upward from a bottom face thereof, wherein the second inflow hole is defined in a top face of the protrusion.

The protrusion includes at least one protrusion, wherein the at least one protrusion includes a first protrusion located at one side of the cover, wherein the first protrusion is located closer to the water supply than the cultivation medium receiving portion is. The at least one protrusion further includes a second protrusion located at the opposite side of the cover.

A vertical level of the second inflow hole is lower than a vertical level of a top face of the cover. The water supply includes a discharge hole through which water is discharged to the cover water channel,

The cover includes a water collector located below the discharge hole, wherein the water collector is configured to receive water discharged from the discharge hole and deliver the received water to the cover water channel.

The first protrusion includes a pair of first protrusions, wherein the water collector is positioned between the pair of first protrusions.

The cultivator further includes an indicator covering a top face of the cover, wherein the indicator is constructed so that the water collector is exposed to an outside. The water supply may be constructed to supply water to the cover water collector which may supply water to the cover water channel.

In the plant cultivation apparatus according to an embodiment of the present disclosure, the cultivation vessel has a discharge hole defined therein through which water in the vessel is discharged to the bed, wherein the bed has a water discharge channel defined therein for collecting water discharged from the discharge hole and guiding the collected water to the water supply.

The water supply includes: storage for storing therein water to be supplied to the plant; and a supply channel connected to the storage, and extending to a location above the cover water channel for supplying water to the cover water channel, wherein the water discharge channel is connected to the storage so that water discharged through the discharge hole is collected into the storage.

The features of the above-described embodiments may be implemented in combination with those of other embodiments unless contradictory or exclusive to those of the other embodiments.

Embodiments of the present disclosure may realize a plant cultivation apparatus that supplies water to the plant efficiently through a top-down water supply scheme that supplies water to the top of the cultivator and supplies water to the top of the cultivation medium.

Further, embodiments of the present disclosure may realize a plant cultivation apparatus that increases a germination rate of a plant and reduces the growth failure via uniform water supply to the cultivation medium.

Further, embodiments of the present disclosure may realize a plant cultivation apparatus constructed to enable smooth respiration and nutrient absorption of roots by supplying water to a top of the cultivation medium in which the plant is received.

Further, embodiments of the present disclosure may realize a plant cultivation apparatus that increases a germination rate of a plant by feeding sufficient moisture to the seeds of the plant.

Further, embodiments of the present disclosure may realize a plant cultivation apparatus in which the water stored inside the cultivator is prevented from being exposed outwardly and thus coming into contact with the user during harvesting of the plant.

Further, embodiments of the present disclosure may realize a plant cultivation apparatus that minimizes generation of pollutants inside the cultivator via a top-down water supply mode.

Effects of the embodiments of the present disclosure are not limited to those as described above, and other effects as not mentioned above may be clearly recognized by those skilled in the art based on following descriptions.

### BRIEF DESCRIPTION OF THE DRAWINGS

FIG. 1 is a perspective view of the plant cultivation apparatus according to one embodiment of the present disclosure.
FIG. 2 is a perspective view of a state in which a door is open in the plant cultivation apparatus according to an embodiment of the present disclosure.
FIG. 3 is a perspective view showing a state in which one embodiment of a cultivator is seated on a bed in the plant cultivation apparatus according to one embodiment of the present disclosure.
FIG. 4 is a perspective view and an exploded view showing one embodiment of a cultivator in the plant cultivation apparatus according to one embodiment of the present disclosure.
FIG. 5 is a bottom view showing one embodiment of a cultivator in the plant cultivation apparatus according to one embodiment of the present disclosure.
FIG. 6 is a perspective view showing a bed in the plant cultivation apparatus according to an embodiment of the present disclosure.
FIG. 7 is a perspective view showing a state in which another embodiment of a cultivator is seated on a bed in the plant cultivation apparatus according to one embodiment of the present disclosure.
FIG. 8 is an exploded view showing another embodiment of a cultivator in the plant cultivation apparatus according to one embodiment of the present disclosure.
FIG. 9 is a perspective view showing another embodiment of a cultivator in the plant cultivation apparatus according to one embodiment of the present disclosure.
FIG. 10 is a top view and a side view showing another embodiment of a cultivator in the plant cultivation apparatus according to one embodiment of the present disclosure.
FIG. 11 is a side view showing a process in which water flows into and is discharged from a cultivator according to one embodiment in the plant cultivation apparatus according to one embodiment of the present disclosure.
FIG. 12 is a side view showing a water supply in the plant cultivation apparatus according to one embodiment of the present disclosure.
FIG. 13 is a top face view of an inside of a water supply in the plant cultivation apparatus according to one embodiment of the present disclosure.
FIG. 14 is a perspective view showing a bed and a discharger in the plant cultivation apparatus according to an embodiment of the present disclosure.

### DESCRIPTION OF SPECIFIC EMBODIMENTS

Hereinafter, embodiments of the present disclosure will be described in detail with reference to the accompanying drawings. The same reference numbers may be allocated to the same or similar components. Redundant descriptions thereof will be omitted. As used herein, a suffix "module" or "unit" as used for a component are intended only for ease of describing the present disclosure, and the suffix "module" or "unit" itself does not have a specific meaning or role. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entirety of list of elements and may not modify the individual elements of the list. When referring to "C to D", this means C inclusive to D inclusive unless otherwise specified.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

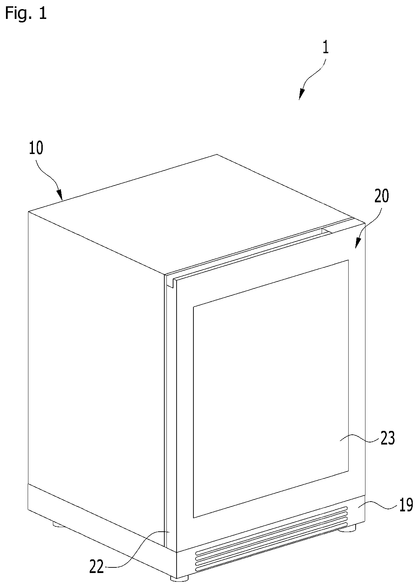

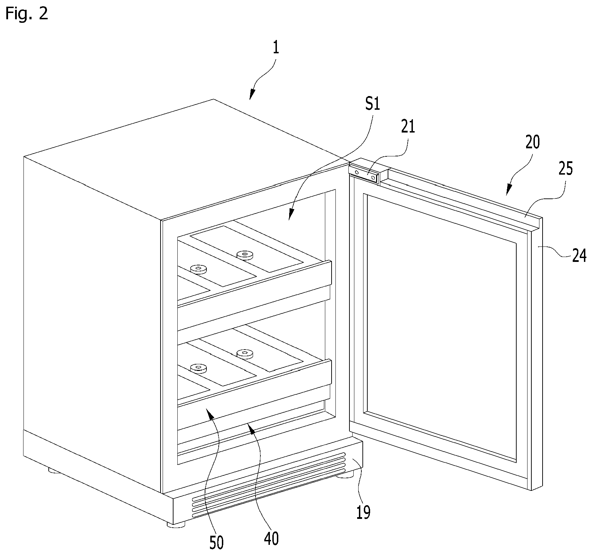

FIG. 1 is a perspective view of a plant cultivation apparatus 1 according to one embodiment of the present disclosure. FIG. 2 is a perspective view of a state in which a door 20 is opened in the plant cultivation apparatus 1 according to one embodiment of the present disclosure.

As shown in FIG. 1 and FIG. 2, the plant cultivation apparatus 1 according to one embodiment of the present disclosure includes a cabinet 10 having a cultivation space S1 defined therein in which a plant is cultivated, and the door 20 for opening and closing the cabinet 10. An outer appearance of the apparatus 1 may be defined by the cabinet 10 and the door 20.

The plant cultivated in the cultivation space S1 may be of a type of a plant that may be eaten by a user, may be easily cultivated, and may not occupy a lot of space, such as leafy vegetables and herbs.

The cabinet 10 may have one open face having an opening defined therein. The cultivation space S1 may be defined in the cabinet 10. The cabinet 10 may have a rectangular parallelepiped shape as shown in the drawing, but is not necessarily limited thereto. The cabinet 10 may be formed in various forms such as a cylinder and a sphere as long as the cultivation space S1 may be defined therein.

Further, as shown in FIG. 1 and FIG. 2, the door 20 may be sized to shield the opening of the cabinet 10. Hereinafter, for convenience of descriptions, the open face defines a front face of the cabinet 10. However, the disclosure is limited thereto.

The door 20 may have a door panel 23 which is at least partially transparent. The door panel 23 may be made of a glass or a transparent plastic material such that the user may see through the panel 23 into an inside of the cabinet.

Due to this structure, the user may visually identify the inside of the cultivation space S1 even when the door 20 is closed, so that a growth state of the plant may be identified by the user. Further, interior effects may be derived. When the identification of the inside of the cabinet is unnecessary, a neat outer appearance of the apparatus may be maintained.

In some cases, a colored coating or a vapor deposited film may be attached to the door panel 23. Thus, the panel 23 may be constructed such that the cultivation space S1 is selectively visible or invisible to the user.

In one example, the door 20 may include a door frame 22 that constitutes a perimeter of the door. A central portion of the door frame 22 may be opened to define an opening. The door panel 23 may be constructed to shield the opening of the door frame 22.

Further, the door 20 may include a door sealing 24 disposed on one face of the door frame 22 facing toward the cabinet 10 and disposed along a perimeter of the opening of the door frame 22.

The door sealing 24 may absorb an impact force exerted from the door 20 onto the cabinet 10 when the door 20 is closed, thereby improving durability and reliability of the plant cultivation apparatus 1.

Further, the door sealing 24 may prevent air flow from the cultivation space S1 and the cabinet 10 to the outside so that a temperature and a humidity of the cultivation space S1 may be kept constant. Further, the door sealing 24 may be made of an insulating material so that the cabinet 10 may be thermally insulated. Accordingly, the cultivation space S1 may maintain a temperature thereof set by the user.

In one example, the door 20 may have a door coupler 21 disposed on one side of the door frame 22 and coupled to the cabinet 10. As shown in FIG. 1 and FIG. 2, the door coupler 24 may be disposed on one side of left and right sides of the door frame 22.

Accordingly, the door may be opened and closed in one direction of left and right directions around the user, thereby increasing the user's convenience. Further, the door 20 may be pivotably coupled to the cabinet 10 via the door coupler 24. The cultivation space S1 may be opened and closed according to pivoting of the door 20. Further, the door 20 may have a door handle 25 disposed at one of an upper end and a lower end of the door frame 22. The user may hold the handle 25 to open and close the door 20.

In one example, a lower cabinet 19 may constitute a bottom portion of the cabinet 10. The lower cabinet 19 may receive an air adjuster (not shown) therein that receives outside-air and supplies the outside-air to the cultivation space S1.

In the plant cultivation apparatus 1 according to an embodiment of the present disclosure, a plurality of beds 50 may be vertically arranged inside the cabinet 10. In the plant cultivation apparatus 1 according to the embodiment of the present disclosure, two beds 50 may be respectively disposed in an upper portion and a lower portion of the cabinet 10. Hereinafter, for convenience of description and understanding, the two beds 50 may be referred to as an upper bed 50 and a lower bed 50, respectively. In another example, at least three beds 50 may be arranged depending on a size of the cabinet 10.

Further, a plurality of cultivators 60 containing plant seeds and nutrients required for cultivation may be seated on a top face of the bed 50. Thus, the bed 50 may be referred to as a shelf or a tray. The interior of the cabinet 10 may act as the cultivation space S1 in which the plant is cultivated.

The cultivator 60 may be provided to be adapted to a combination of various kinds of seeds and corresponding nutrients. The user may select the cultivator to be adapted to a target plant type for cultivation. Further, the bed 50 may have a structure on which the cultivator 60 may be seated and by which a seating state thereof may be maintained.

Further, as will be described later, the bed 50 may have water discharge channels 512 defined therein through which water supplied from a water supply 40 flows. Further, the bed 50 may maintain an adequate water-level therein so that water may be supplied to the cultivator 60 at all times.

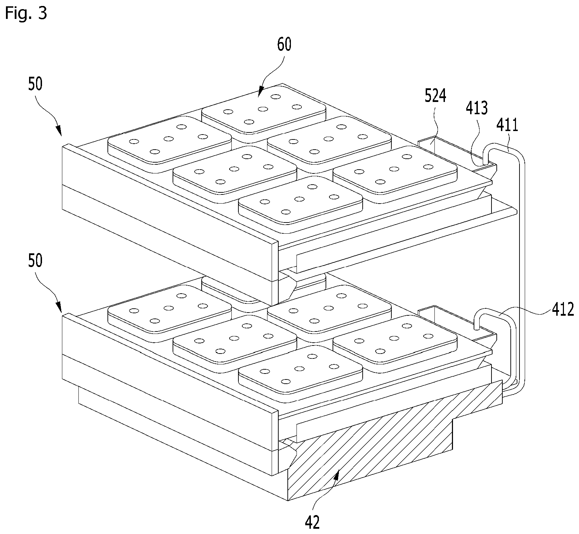

FIG. 3 is a perspective view showing a state in which a cultivator according to one embodiment is seated on a bed in a plant cultivation apparatus according to an embodiment of the present disclosure.

FIG. 3 shows the bed 50, the water supply 40, and the cultivator 60 disposed inside the cabinet 10 in the plant cultivation apparatus 1 according to one embodiment of the present disclosure.

The plant cultivation apparatus 1 according to an aspect of the present disclosure may include the bed 50 disposed inside the cabinet, the cultivator 60 seated on the bed and receiving therein a cultivation medium 64 in which at least a portion of the plant is received, and the water supply 40 disposed inside the cabinet and constructed to supply water to the bed 50.

The cultivation medium 64 may contain plant seeds. The roots of the plant may extend through the cultivation medium and receive the nutrient liquid.

The water supply 40 may include a water supply casing 42 having storage 43, a supply pump 44, a flow sensor 45, a branching valve 46, and a connective channel 47 as described below received therein.

The storage 43 may store therein water to be supplied to the cultivator 60 for the plant. The storage 43 may store the water collected from the cultivator 60.

As shown in FIG. 3, the water supply casing 42 may be disposed below the bed and may be coupled to the cabinet 10.

Due to the water supply casing 42, the water supply casing 42 having storage 43, the supply pump 44, the flow sensor 45, the branching valve 46, and the connective channel 47 are not exposed to the outside, thereby improving the reliability of the water supply 40, and achieving neat outer appearance thereof.

In one example, the cultivator 60 may be seated on the bed. The nutrient liquid (hereinafter, water) from the water supply 40 may be fed to the cultivator 60 through the water discharge channels 4911 and 4913 which will be described later. The cultivator 60 may be constructed such that the water may be discharged to the storage (not shown) through the water discharge channels 4911 and 4913.

Further, the cultivator 60 may include a plurality of cultivators disposed on a top face of the bed 50. Thus, the plurality of cultivators 60 may receive different types of plants, respectively. Thus, the different types of plants may be cultivated in the cultivation space S1.

In other words, the cultivator 60 may be provided to be adapted to a combination of various kinds of seeds and corresponding nutrients. The user may select a plant to be cultivated and cultivate the plant in the cultivator 60.

Further, the cultivator 60 may be removably seated on the bed 50. Accordingly, the user may input the cultivation medium 64 containing the seeds of the plant therein into the cultivator 60 while the cultivator 60 is located out of the plant cultivation apparatus 1. Then, the user may seat the cultivator 60 on the bed 50 through one open face of the cabinet 10.

Further, when the plant grows and then a harvest timing arrives, the user may separate the cultivator 60 from the bed 50. Thus, the plant in the cultivator 60 may be easily harvested while the cultivator is located out of the plant cultivation apparatus 1, thereby increasing easiness and convenience of harvesting by the user.

Further, the cultivator 60 may have a shape extending from one side thereof to the opposite side thereof. A direction in which the cultivator 60 extends may be a first direction from the cultivation space S1 toward the door 20. Further, the direction in which the cultivator 60 extends may be defined in any direction on the bed 50.

Further, as shown, while being seated on the top face of the bed 50, the plurality of cultivators 60 may be arranged to be spaced apart from each other in the first direction in which the cultivator 60 extends and a second direction perpendicular to the first direction.

Hereinafter, for convenience of description, a direction in which the cultivator 60 extends is defined as the first direction, while a direction perpendicular to the first direction is defined as the second direction.

In one example, the bed 50 may be embodied as a rectangular plate that partitions an inside of the cabinet 10. Although not shown in the drawing, the bed 50 may be seated into a retract and extend guide (not shown) defined in each of both opposing side faces of the cabinet 10 in the retracting and extending manner.

A bed water collector 524 constructed to receive water through the water supply channel may be formed in one side of the bed 50. The bed water collector 524 may be connected to the water discharge channels 4911 and 4913 disposed inside the bed 50, such that the water supplied to the bed water collector 524 may be continuously supplied to the cultivator 60.

The water supply channel may include a first supply channel 411 extending to the bed water collector 524 of the upper bed 50 and a second supply channel 412 extending to the bed water collector 524 of the lower bed 50. The first supply channel 411 and the second supply channel 412 may be constructed to supply the water to the upper bed 50 and the lower bed 50, respectively.

The water supply channel may have water discharge holes 413 defined respectively at positions corresponding to the bed water collectors 625. Thus, the water supplied from the first supply channel 411 and the second supply channel 412 may be directly inflowed to the bed water collectors 524.

Each of the first supply channel 411 and the second supply channel 412 may be embodied as a metal pipe made of stainless steel. Thus, each of the first supply channel 411 and the second supply channel 412 may be managed hygienically and may be maintained in a rigid manner to prevent clogging thereof due to deformation or bending of a flow path, and to improve the reliability of water supply.

A water supply structure in which the water is fed to the upper bed 50 and a water supply structure in which the water is fed to the lower bed 50 may be the same only except for a difference in a vertical position thereof. The water supplied to the bed water collector 524 may supply moisture to the cultivator 60 mounted on the bed 50.

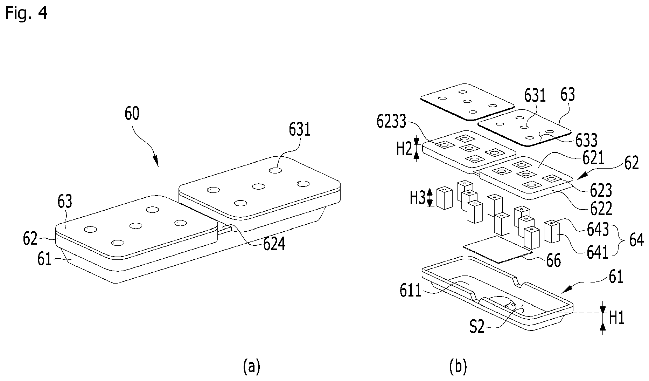

In one example, (a) in FIG. 4 is a perspective view showing an exemplary cultivator in the plant cultivation apparatus. (b) in FIG. 4 is an exploded view showing the exemplary cultivator in the plant cultivation apparatus.

As shown in FIG. 4, the cultivator 60 includes a cultivation vessel 61 seated on the bed 50 and constructed to have an open top, and a cover 62 for shielding the open top of the cultivation vessel 61.

The cultivation vessel 61 is constructed to have the open top, and seated on the bed 50. The cultivation vessel 61 may be constructed to have a size and a shape corresponding to those of a bed receiving portion 521 defined in a top face of the bed 50.

The cultivation vessel 61 may be sized to be received in the bed receiving portion 521. Accordingly, the user may select the cultivator 60 corresponding to a type of the plant to be cultivated and may seat the selected cultivator 60 at a desired position on the bed 50 to start cultivation of the plant.

Further, the cultivation vessel 61 may include a vessel body a bottom face 611 of the cultivation vessel and may include having the cultivation medium receiving space S2 therein. The cultivation vessel 61 may further include a vessel coupler 6151 that extends outwardly from the vessel body and is coupled to the cover 62.

The vessel coupler 6151 may further include a groove 6153 extending vertically. Thus, the cover may be press-fitted to the cultivation vessel 61.

Further, the cultivation vessel may have a discharge hole 6135 defined therein through which water of the cultivation medium receiving space is discharged to the water discharge channels 4911 and 4913. Water may either flow from the water supply 40 through the discharge hole 6135 into the cultivation medium receiving space or water from the cultivation medium receiving space may be collected back into the water supply 40 through the discharge hole 6135.

Further, the discharge hole 6135 may be defined in the bottom face 611 of the cultivation vessel 61, and may communicate with the water discharge channels 4911 and 4913 defined in the bed.

The cultivator 60 may include a cultivation filter 66 disposed on the bottom face 611 of the cultivation vessel 61 for removing foreign substances from the water discharged or inflowing through the first communication hole 6135. The foreign material removed using the cultivation filter 66 may be a portion of the cultivation medium 64 produced in the plant growth process, or may be a portion of the root of the plant.

Further, the foreign material may be a portion of a stem or a leaf of a plant that is produced due to a top water supply structure to be described later. The cultivation filter 66 may be constructed to shield the first communication hole 6135, and to prevent inflow of foreign substances as produced in the cultivation medium receiving space into the water supply 40.

In one example, the cultivation vessel 61 may have the cultivation medium receiving space S2 defined therein for receiving therein the cultivation medium 64 in which at least a portion of the plant is received. The cultivation medium 64 may be received in the cultivation medium receiving space S2 defined in the cultivation vessel 61. The cultivation medium 64 may extend vertically from the bottom face 611 of the vessel toward the cover 62 by a predetermined vertical dimension H3.

Nutrients necessary for the plant growth may be contained in the cultivation medium 64. When only water is supplied to the cultivation medium 64 without supply of additional components thereto, the plant growth may proceed at an adequate rate.

Further, the cultivation medium 64 may include a cultivation medium body 641 that defines the outer appearance of the cultivation medium 64 and a cultivation medium hole 643 that is defined at a top portion of the cultivation medium body. The cultivation medium 64 contains the seeds of the plant. The cultivation medium may be made of various materials capable of absorbing the water stored in the cultivation medium receiving space S2 and supplying the water to seeds or roots inside the cultivation medium 64.

In one example, the cover 62 may cover the cultivation medium receiving space S2 of the cultivation vessel 61. A top of the cultivation vessel 61 is open. Thus, the cover 62 may be disposed at a top of the cultivation vessel and may be coupled to the cultivation vessel 61.

In one example, the cultivation medium receiving space S2 may store therein water supplied to the cultivation medium 64. When the water is exposed to air out of the cultivator and to light from an artificial light source (not shown), reproduction of microorganisms in the water may become active, thereby adversely affecting the growth of the plant.

In order to prevent this situation, the cover 62 may cover the cultivation medium receiving space S2 of the cultivation vessel 61, so that the cultivation medium receiving space is prevented from being exposed to an environment out of the cultivator 60.

Due to the cover 62, the water stored inside the cultivation medium receiving space S2 may be prevented from being exposed to light irradiated from the artificial light source (not shown) disposed above the top of the cultivator 60. Contact of the water with the air outside the cultivator 60 may be prevented.

Further, due to the cover 62, the roots of the plant grown in the cultivation medium 64 may be prevented from being exposed to the light source (not shown), so that the growth of the plant may be improved.

The cover 62 may be constructed to be coupled to the top face and the outer face of the vessel coupler 6151 while being disposed above the vessel coupler 6151. The cover 62 may be coupled to the vessel coupler 6151 in a bolt-nut structure. The disclosure is not limited thereto. Hereinafter, as shown in the drawings, an example in which the cover 62 is coupled to the vessel coupler 6151 of the cultivation vessel 61 in a press-fitting manner is described.

The cover 62 is coupled to the vessel coupler 6151 of the cultivation vessel 61 in a press-fitting manner. The cover may include a cover coupler 624 which is formed in a position corresponding to that of the groove 6153 and is inserted into the groove 6153.

In one example, the cover 62 may include a cultivation medium receiving portion 623 which is formed at a position corresponding to that of the cultivation medium 64 and into which an upper end of the cultivation medium is inserted. Due to the cultivation medium receiving portion 623, the cultivation medium 64 may be fixedly received inside the cultivation vessel 61 when the cover 62 is coupled to the cultivation vessel.

The cover 62 may have a predetermined vertical dimension H2 and may extend from a bottom to a top thereof. The cultivation medium receiving portion 623 may have a vertical dimension equal to the vertical dimension H2 of the cover 62 such that the upper end of the cultivation medium 64 may be received therein.

The number of the cultivation medium receiving portions 623 may correspond to the number of the cultivation mediums 64. In order to fix the position of the cultivation medium 64, the number of the cultivation medium receiving portions 623 may be greater than or equal to the number of the cultivation medium 64.

As shown in (b) in FIG. 4, the cultivation medium receiving portion 623 is defined in a top face of the cover. The cultivation medium receiving portion 623 may include a plurality of the cultivation medium receiving portions. The present disclosure is not necessarily limited thereto. A distance between adjacent ones of the plurality of cultivation medium receiving portions 623 may be appropriately designed according to the type of plant to be cultivated.

The cultivation medium receiving portion 623 may have a cover through-hole 6233 defined at a position thereof corresponding to a position of the cultivation medium 64 so as to expose at least a portion of a top face of the cultivation medium 64. The cover through-hole 6233 may extend through the top face of the cover 62.

A seed of the plant received in the cultivation medium hole 643 germinates. A stem of the plant may extend through the cover through-hole 6233 and may grow toward a space above the top of the cover 62. Therefore, for smooth growth of the plant, a diameter of the cover through-hole 6233 may be defined to be larger than a diameter of the cultivation medium hole 643.

That is, in a top view of the cultivator 60, the cover through-hole 6233 may be defined to expand along a radial direction of the cultivation medium hole 643. The diameter of the cover through-hole 6233 may be appropriately designed in consideration of the size of the plant being cultivated.

Further, a center of the cover through-hole 6233 may be positioned to correspond to a center of the cultivation medium hole 643. Thus, when the plant germinates and grows, and thus extends to be exposed to a space out of the cultivation medium 64, the plant may be recognized by the user due to the cover through-hole 6233.

In one example, the cultivator 60 may further include an indicator 63 disposed above the top face of the cover 62 to minimize exposure of the cultivation medium 64. A seed name of the plant may be written on the indicator. The seed name of the plant may be marked on the indicator 63 so that the type of the plant grown in the cultivation space may be easily recognized by the user.

The indicator 63 may be constructed to cover the top face of the cover 62. As shown in the figure, the indicator 63 may include a plurality of indicators and may be disposed above the top face of the cover 62. The indicator 63 may be coupled to a remaining area of the cover 62 except for a cover coupler 624.

Thus, in the top view of the cultivator 60, a top face 633 of the indicator 63 may be exposed to the outside, and a top face of the cover except for the cover coupler 624 may not be exposed to the outside.

The indicator 63 may have an indicator hole 631 defined therein at a position corresponding to that of the cover through-hole 6233 and may have a diameter smaller than the diameter of the cover through-hole 6233, so that exposure of the cultivation medium 64 to the outside may be prevented. The plant may grow and extend through the indication hole 631 and toward a space above the top of the cultivator 60.

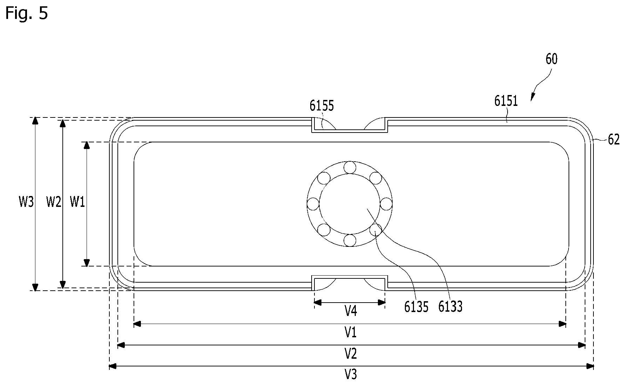

FIG. 5 is a bottom view showing an embodiment of a cultivator in the plant cultivation apparatus according to an embodiment of the present disclosure. Hereinafter, descriptions duplicate with those of the above-described structure will be omitted.

FIG. 5 is a bottom view of the cultivator 60. As shown in FIG. 5, a vessel body of the cultivation vessel 61 may further include a receiving recess 6133 that is defined in the bottom face 611 of the cultivation vessel 61 and is recessed upwardly.

The discharge holes 6135 may be defined and may be arranged around the receiving recess 6133. The discharge holes 6135 may be in contact with a seat contact portion 514 formed on the bed 50 which will be described later, so that water in the cultivation medium receiving space S2 is discharged to the water discharge channels 4911 and 4913 through the discharge holes 6135. The water supplied from the supply channel may flow to the discharge holes 6135.

The seat contact portion 514 may protrude from a first bed portion 51 as an upper portion of the bed. A diameter of the upper end of the receiving recess 6133 may be sized in corresponding manner to a size of the seat contact portion 514. An outer circumference face of the seat contact portion 514 may face toward the discharge holes 6135.

Further, as shown, the discharge holes 6135 may be arranged around the receiving recess 6133 and may be spaced apart from each other by the same distance. Accordingly, water supplied from the water supply 40 may be smoothly supplied to the inside of the cultivation medium receiving space S2, and water discharged to the water supply 40 may be smoothly discharged to the outside out of the cultivation medium receiving space S2.

In one example, as described above, the cultivator 60 may extend toward the first direction and the second direction. For convenience of description, a length of each of the cultivation vessel 61 and the cover 62 extending in the first direction is defined as a longitudinal length, and a length of each of the cultivation vessel 61 and the cover 62 extending in the second direction perpendicular to the first direction is defined as a transverse length.

A longitudinal length V1 of the bottom face 611 of the cultivation vessel 61 may be sized to be smaller than a longitudinal length V3 of the cover 62. A transverse length W1 of the bottom face 611 may be smaller than a transverse length W3 of the cover 62. Thus, the cultivation medium 64 inside the cultivation vessel 61 may be screened with the cover 62.

The longitudinal length V1 of the bottom face 611 of the cultivation vessel 61 and the transverse length W1 of the bottom face 611 may be determined appropriately based on a size of the plant cultivation apparatus, s size of the plant cultivated therein, a size of the cultivation medium 64 received in the cultivation medium receiving space, etc.

The outermost longitudinal length V2 of the inner face of the vessel body of the cultivation vessel 61 may be sized to be larger than the longitudinal length V1 of the bottom face. The outermost transverse length W2 of the inner face of the vessel body of the cultivation vessel 61 may be larger than the transverse length W1 of the bottom face.

Accordingly, the water may be supplied from the water supply 40 to the cultivation vessel 61 such that a water level in the cultivation medium receiving space S2 may not increase rapidly. Thus, a sufficient amount of the water may be supplied to the cultivation medium 64.

A longitudinal length V1 of the groove 6153 may be sized to be larger than a longitudinal length (not shown) of the cover coupler 624. This allows the cover 62 to screen an entirety of the cultivation receiving space.

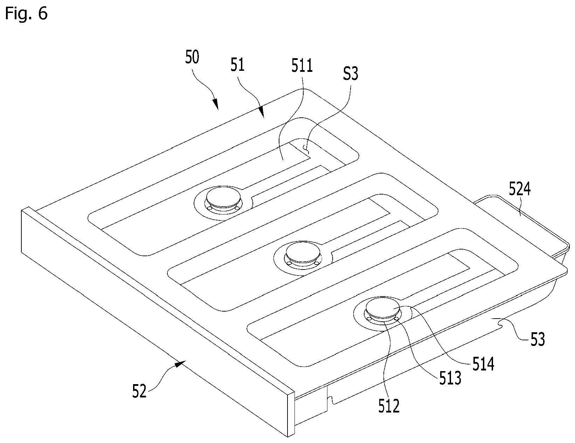

In one example, FIG. 6 is a perspective view showing a bed in the plant cultivation apparatus according to an embodiment of the present disclosure.

The bed 50 includes a plurality of beds which may have the same structure except for vertical levels thereof. Thus, only one bed 50 among the plurality of beds will be described by way of example.

In one example, the bed 50 may be embodied as a rectangular plate that partitions an inside of the cabinet 10. Although not shown in the drawing, the bed 50 may be seated into a retract and extend guide (not shown) defined in each of both opposing side faces of the cabinet 10 in the retracting and extending manner as described above.

The bed 50 may have a second bed portion 52 constituting a lower portion of the bed 50. Water may be generally supplied to the second bed portion 52. The second bed portion 52 may define an overall shape of the bed 50, and may be made of a plastic material.

Further, both third bed portions 53 extending laterally and coupled to the second bed portion 52 may be respectively coupled to both opposing ends of the second bed portion 52.

Further, the bed 50 may have the first bed portion 51 disposed on a top pace of the second bed portion 52. The cultivation vessel is seated on the first bed portion 51. The first bed portion 51 may constitute the upper portion of the bed. The first bed portion 51 may be constructed to be detachably coupled to the second bed portion 52.

Specifically, a bed receiving portion 521 may be defined in the second bed portion 52, and the first bed portion 51 may be seated in the bed receiving portion 521. The bed receiving portion 521 may have a shape corresponding to that of the first bed portion 51.

That is, the cultivation vessel receiving portion 511 in which the cultivation vessel 61 is seated may be defined in the first bed portion 51. In this connection, the bed receiving portion 521 may be defined in a position corresponding to that of the cultivation vessel receiving portion 511 and may have a shape corresponding to that of the cultivation vessel receiving portion 511, so that the cultivation vessel receiving portion 511 may overlap the bed receiving portion 521.

The cultivation vessel receiving portion 511 may be recessed in the first bed portion 51 to have a shape corresponding to that of the cultivation vessel 61 so that the cultivation vessel 61 may be detachably received therein. A cultivation vessel receiving space S3 in which the cultivation vessel 61 is seated may be defined in the cultivation vessel receiving portion 511.

In one example, the second bed portion 52 may have the bed water collector 524 and the water discharge channels 4911 and 4913 defined therein as passages through which water supplied through the bed water collector 524 flows
The water supplied to the cultivator 60 through the water discharge channels 4911 and 4913 may continuously supplied to the cultivator 60. In detail, the water discharge channels 4911 and 4913 may communicate with the bed water collector 524. The water discharge channels 4911 and 4913 may be constructed to communicate with the storage 43 included in the water supply 40 which will be described later, so that the water discharged from the cultivator 60 is discharged to the storage 43 via the discharge channels 4911 and 4913.

In one example, the first bed portion 51 may include a seat communication hole 512 extending through a bottom face of the cultivation vessel receiving portion 511 at a position corresponding to a position of the seat contact portion 514. A bottom of the seat communication hole 512 may be in communication with the water discharge channels 4911 and 4913. A top of the seat communication hole 512 may face the seat contact portion 514 such that water discharged or flowing from or into the discharge hole 6135 may flow through the seat communication hole 512.

Further, the first bed portion 51 may include a plurality of seat protrusions 513 formed on a bottom face of the cultivation vessel receiving portion 511 and arranged along the circumference of the seating communication hole 512. A top of the seat protrusion 513 may face the seat contact portion 514, and may be in contact with the bottom face of the seat contact portion 514.

Although not shown in the drawing, the first bed portion 51 may include a plurality of elastic members (not shown) disposed between the seat protrusions 513 and arranged along a circumference of the seat communication hole 512. The elastic member may be constructed to press the seat contact portion 514 upwards.

In detail, when the cultivation vessel 61 is seated in the cultivation vessel receiving portion 511, the receiving recess 6133 of the cultivator 60 may come into contact with the seat contact portion 514 and then the seat contact portion 514 may be pushed downwards.

As the seat contact portion 514 moves downwards, the seat contact portion 514 may come into contact with the seat protrusions 513. The water flowing from the water discharge channels 4911 and 4913 may flow into the seating communication hole 512, and then the water may flow or be discharged into or from a space between the seat contact portion 514 and a bottom face of the cultivation vessel receiving portion 511.

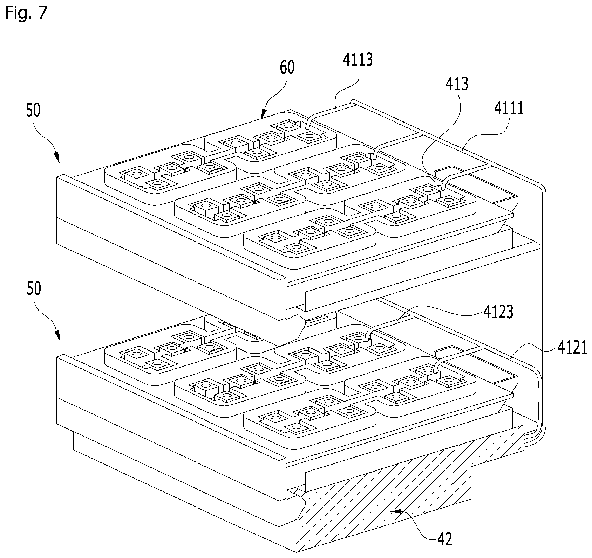

In one example, FIG. 7 is a perspective view showing a state in which another embodiment of a cultivator is seated on a bed in the plant cultivation apparatus according to an embodiment of the present disclosure. Hereinafter, descriptions duplicate with those of the above-described structure will be omitted.

In the plant cultivation apparatus 1 according to an embodiment of the present disclosure, the cultivator 60 is seated on the bed 50 and includes a cultivation vessel 61 having an open top, and a cover 62 for shielding the open top of the cultivation vessel 61.

Further, the cover 62 further includes a cover water channel 65 disposed in a top face of the cover 62 of the cultivator 60 for receiving water to be supplied to the plant. The water supply 40 may be disposed inside the cabinet 10 and at least a portion of the water supply 40 may be located above the cover water channel 65 to supply water to the cover water channel 65.

Further, the cover water channel 65 is disposed in the top face of the cover. The cover water channel 65 may be constructed to communicate with the inside of the cultivator 60 so that the water supplied from the second water supply 40 is guided to the cultivation medium therethrough.

The water supply 40 may include a supply channel that supplies water to the cultivator 60, and the storage 43 that supplies water to the cultivator 60 and collects the water therefrom and stores the collected water therein.

As shown in FIG. 3, the water supply channel may be constructed to supply water to the bed water collector 625 of the bed 50 through the first water supply channel 415. Further, as shown in FIG. 7, the water supply channel may be constructed to supply water to the cover water channel 65.

The supply channel may include a first supply channel 411 for supplying water to the cover water channel 65 of the upper bed 50 of the plurality of beds 50 and a second supply channel 412 supplying water to the cover water channel 65 of the lower bed 50 of the plurality of beds 50.

The first supply channel 411 and the second supply channel 412 may be disposed independently and may extend to face toward the cultivator 60 to supply water necessary for plant growth.

The first supply channel 411 may include a first supply flow channel 4111 connected to the storage 43 and extending upwardly, and acing as a passage through which water from the storage 43 flows upwards, and a plurality of first supply branch channels 4113 branching from the first supply flow channel 4111 and extending towards the cover water channel 65 of the cultivator 60.

The second supply channel 412 may include a second supply flow channel 4121 connected to the storage 43 and extending upwardly, and acing as a passage through which water from the storage 43 flows upwards, and a plurality of second supply branch channels 4123 branching from the second supply flow channel 4121 and extending towards the cover water channel 65 of the cultivator 60.

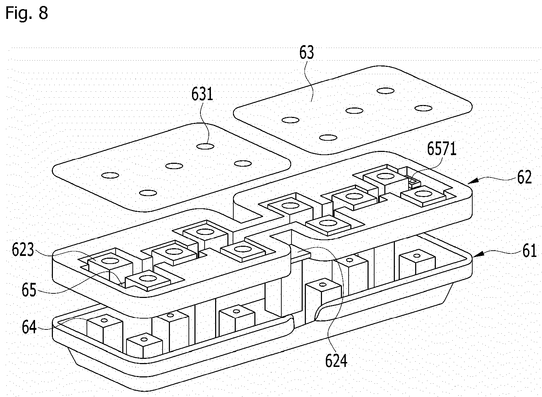

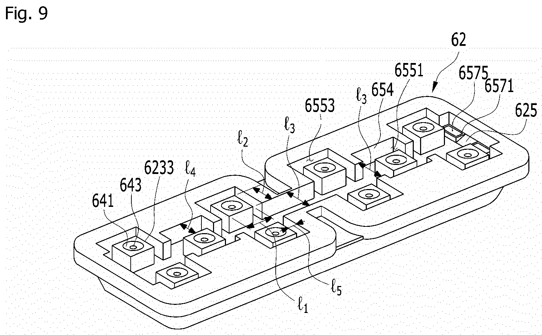

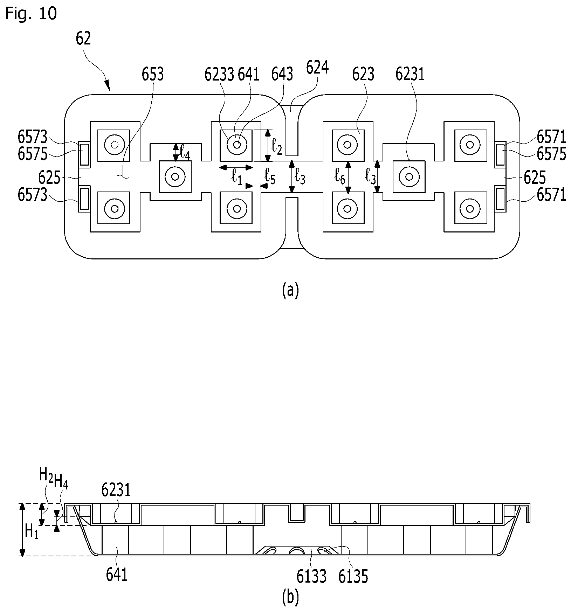

FIG. 8 is an exploded view showing the cultivator in the plant cultivation apparatus according to one embodiment of the present disclosure. FIG. 9 is a perspective view showing the cultivator in the plant cultivation apparatus according to one embodiment of the present disclosure. (a) in FIG. 10 is a top view of the cultivator in the plant cultivation apparatus according to one embodiment of the present disclosure, and (b) in FIG. 10 is a side view of the cultivator of the plant cultivation apparatus according to one embodiment of the present disclosure. Hereinafter, descriptions duplicate with those of the above-described structure will be omitted.

The cover water channel 65 may be constructed to overlap with at least a portion of the cultivation medium receiving portion 623. In other words, the cover water channel 65 may be constructed such that one face of the cultivation medium receiving portion 623 is exposed to the inside of the cover water channel 65.

Further, the cultivation medium receiving portion 623 may have a first inflow hole 6231 for providing water from the cover water channel 65 to the cultivation medium 64. The first inflow hole 6231 may be defined to be exposed to the inside of the cover water channel 65. The water supplied from the supply channel to the cover water channel 65 is received in the cover water channel 65, and flows into the first inflow hole 6231, and then is supplied to the cultivation medium 64.

As shown in FIG. 9, the cover water channel 65 may include a first cover water channel 6551 extending from one side to the opposite side of the cover and a second cover water channel 6553 branching from the first cover water channel 6551. A direction in which the first cover water channel 6551 extends may be a direction in which the cultivator 60 extends toward the door 20 as described above.

Further, a direction in which the second cover water channel 6553 branches from the first cover water channel 6551 and extends may be inclined relative to a direction in which the first cover water channel 6551 extends. As shown in FIG. 9, the direction in which the second cover water channel 6553 branches from the first cover water channel 6551 and extends may be perpendicular to the direction in which the first cover water channel 6551 extends.

The second cover water channel 6553 may branch and extend from one end or the other end of the first cover water channel 6551 and/or may branch and extend from a middle point except for one end or the other end of the first cover water channel 6551.

Further, the cover water channel 65 may be defined by depressing a portion of the top face of the cover 62. The cultivation medium receiving portion 623 protrudes upward from a bottom face 653 of the cover water channel 65 and may be positioned inside the cover water channel 65.

As described above, the cultivation medium 64 may include a plurality of mediums. The cultivation medium receiving portion 623 may include a plurality of cultivation medium receiving portions. Thus, the cover water channel 65 may extend so as to connect a plurality of points corresponding to positions of the plurality of cultivation medium 64 to each other.

Further, the plurality of cultivation medium receiving portions 623 may be constructed to be positioned inside the first cover water channel 6551 and the second cover water channel 6553. Accordingly, the first inflow hole 6231 through which the water stored in the cover water channel 65 flows into the inside of the cultivation medium receiving portion 623 may include a plurality of first inflow holes arranged along a circumference of the cultivation medium receiving portion 623. Thus, the water in the cover water channel 65 may be more smoothly supplied to the cultivation medium 64.

As described above, the cultivation medium 64 may be in contact with the inner face of the cultivation medium receiving portion 623. The upper end of the cultivation medium 64 may be inserted into the cultivation medium receiving portion. The first inflow hole 6231 may be constructed to extend from the inner face of the cultivation medium receiving portion 623 toward the cover water channel 65 to guide the water received in the cover water channel 65 to the cultivation medium 64.

That is, one end of the first inflow hole 6231 may be exposed toward the interior of the cover water channel 65, and the other end of the first inflow hole 6231 may be in contact with the upper end of the cultivation medium 64. Accordingly, water from the cover water channel 65 may be supplied to the cultivation medium 64 through the first inflow hole 6231.

The smaller a vertical dimension from the bottom face 653 of the cover water channel 65 to the first inflow hole 6231, the more efficiently the inflow of water from the cover water channel 65 to the first inflow hole 6231 may be made. Accordingly, the first inflow hole 6231 is constructed to be in contact with the bottom face 653 of the cover water channel 65 so that water received in the cover water channel 65 may flow into the first inflow hole 6231.

In other words, a portion of a diameter of one end of the first inflow hole 6231 exposed toward the inside of the cover water channel 65 may be in contact with the bottom face 653 of the cover water channel 65.

Thus, after the supply of water from the water supply channel is finished, the water supplied to the cover water channel 65 does not remain on the bottom face 653 of the cover water channel 65 but an entire amount thereof flows into the first inflow hole 6231 and may be supplied to the medium.

Further, after the supply of water from the supply channel is finished, the water supplied to the cover water channel 65 does not remain on the bottom face 653 of the cover water channel 65. Thus, the water inside the cover water channel 65 exposed to the outside-air and the light energy source (not shown) be protected from contamination.

Further, a vertical level of the first inflow hole 6231 may correspond to a vertical level of the lower end of the cultivation medium hole in which the seeds of the cultivation medium 64 are embedded. Thereby, water may be supplied directly from the first inflow hole 6231 to the cultivation medium 64.

In one example, a longitudinal direction l1 of the cultivation medium receiving portion 623 along an extending direction of the first cover water channel 6551 may be equal to a transverse length l2 of the cultivation medium receiving portion 623 perpendicular to the extending direction of the first cover water channel 6551. The longitudinal and transverse lengths l1 and l2 of the cultivation medium receiving portion 623 may be sized based on a shape of the cultivation medium 64.

A width l3 of the cover water channel 65 perpendicular to the extending direction of the first cover water channel 6551 may be defined to be larger than each of the transverse lengths l1 and l2 of the cultivation medium receiving portion 623. Thus, the flow of water along the cover water channel 65 may be achieved smoothly.

Further, the cultivation medium receiving portion 623 may be spaced apart from a sidewall 654 of the cover water channel 65 by a predefined spacing 15. The predefined spacing l5 between the sidewalls 654 of the cover water channel 65 and the cultivation medium receiving portion 623 may be sized so that the flow of water along the cover water channel 65 is not too fast.

The predefined spacing l5 may be appropriately designed based on a vertical dimension of the cover water channel 65 in the top face of the cover 62, a size of the cultivation medium receiving portion 623, and an amount of water supplied to the cover water channel 65.

Further, the sidewall 654 of the cover water channel 65 may be formed such that a portion thereof facing toward the cultivation medium receiving portion 623 is recessed in a direction away from the cultivation medium receiving portion 623.

In other words, the portion of the sidewall 654 of the cover water channel 65 facing toward the cultivation medium receiving portion 623 closest thereto may be recessed so as to be spaced from the cultivation medium receiving portion 623 by the predefined spacing l4, thereby defining a predetermined space between the cultivation medium receiving portion 623 and the sidewall.

Thus, the water moving around the cultivation medium receiving portion 623 may be received in a larger amount in a space between the cultivation medium receiving portion 623 and the sidewall 654 of the cover water channel 65.

Thus, a time duration for which the water received in the space between the cultivation medium receiving portion 623 and the sidewall 654 of the cover water channel 65 is in contact with the cultivation medium receiving portion 623 may be increased. Thus, a time duration for which the water flows into the second inflow hole 6232 of the cultivation medium receiving portion 623 may be increased.

In one example, the cover water channel 65 may include protrusions 6571 and 6573 protruding upward from the bottom face 653 of the cover water channel 65. The protrusions 6571 and 6573 may include a first protrusion 6571 positioned on one side of the cover 62 and positioned closer to the water supply 40 than the cultivation medium receiving portion 623 is.

Further, the protrusions 6571 and 6573 may further include a second protrusion 6573 located on the opposite side of the cover. The first protrusion 6571 and the second protrusion 6573 may be respectively disposed at one side and the opposite side in the extending direction of the first cover water channel.

Because the first protrusion 6571 and the second protrusion 6573 are disposed at one side and the opposite side, respectively, a flow rate of water moving inside the cover water channel 65 may be kept constant.

The cover water channel 65 may include a second inflow hole 6575 defined in a top face of each of the protrusions 6571 and 6573 and communicating with the inside of the cultivation vessel. In other words, the second inflow hole 6575 may be constructed to communicate with the cultivation medium receiving space S2. Water from the cover water channel 65 may flow into the cultivation medium 64 through the second inflow hole 6575.

Further, when the water supplied to the cover water channel 65 inflows into a cover through-hole 6233 defined in a top face of the cultivation medium receiving portion 623, an amount of water to be supplied to the root of the plant decreases. This adversely affects the growth of the plant.

Therefore, the vertical dimension H4 from the bottom face 653 of the cover water channel 65 to the second inflow hole 6575 may be smaller than the vertical dimension H2 from the bottom face 653 of the cover water channel 65 to the cover through-hole 6233. Thus, the water supplied to the cover water channel 65 may be prevented from flowing into the cover through-hole 6233.

In other words, the vertical dimension H4 from the bottom face 653 of the cover water channel 65 to the second inflow hole 6575 may be smaller than the vertical dimension H2 from the bottom face 653 of the cover water channel 65 to the cover through-hole 6233. In this connection, when the vertical level of the water in the cover water channel 65 is higher than or equal to the vertical level H4 of the second inflow hole 6575, the water inside the cover water channel 65 may be discharged through the second inflow hole 6575. Thus, the water supplied to the cover water channel 65 may be prevented from flowing into the cover through-hole 6233.

Further, when the amount of water supplied from the supply channel to the cover water channel 65 is too large, the water supplied to the cover water channel 65 through the second inflow hole 6575 may be guided to the cultivation medium receiving space S2.

In one example, the first protrusion 6571 may be located closer to the water supply 40 than the second protrusion 6573 may be. Thus, when a vertical level of the water in the cover water channel 65 is greater than or equal to the vertical level H4 of the second inflow hole 6575, an amount of the water discharged into the second inflow hole 6575 of the first protrusion 6571 may be greater than an amount of water discharged into the second inflow hole 6575 of the second protrusion 6573.

Further, due to the presence of the second protrusion 6573, water may be discharged more smoothly to the cultivation medium receiving space S2 than when only the first protrusion 6571 is present.

Further, the first protrusion 6571 may be located closer to the water supply 40 than the cultivation medium receiving portion 623 may be. Thus, the water supplied from the water supply 40 may be prevented from flowing into the cover through-hole 6233. When water is supplied to the cultivation medium through the first inflow hole 6231 of the cultivation medium receiving portion 623, the reliability of the supply may be improved.

Further, depending on the type of the plant cultivated in the plant cultivation apparatus 1, an amount of the water supplied to the cultivator 60 may be greater than an amount in which the cover water channel 65 may receive the water. In this connection, the water may be simultaneously supplied to the upper end and lower end of the cultivation medium through the second inflow hole 6575 defined in the protrusion and the first inflow hole 6231 defined in the cultivation medium receiving portion.

In one example, the supply channel may have a discharge hole 413 through which water is discharged to the cover water channel 65. The cover 62 may include the cover water collector 625 that is located below the discharge hole 413 and receives the water discharged from the discharge hole 413. The cover water channel 65 may be constructed to be connected to the cover water collector 625 and receive water therefrom.

Further, the water collector 625 may be disposed at each of one side and the opposite side in the direction in which the cover water channel 65 extends. The first protrusion 6571 may include a pair of protrusions. The water collector 625 may be positioned between the pair of the first protrusions 6571 and may collect the water supplied from the discharge hole 413 and guide the collected water to the cover water channel 65.

Further, the water collector 625 may have a predetermined vertical dimension H4 based on the bottom face 653 of the cover water channel 65. The water collector 625 may be inclined such that a vertical level thereof is lowered as the collector 625 extends toward the cover water channel 65. One end thereof connected to the cover water channel 65 together with the bottom face 653 of the cover water channel 65 may define a continuous face.

When the vertical dimension of the discharge holes 41511 and 41521 from the bottom face 653 of the cover water channel 65 is excessively larger, water falling to the water collector 625 may flow out of the cover water channel 65. However, due to the structure in which the water collector 625 has the inclination such that a vertical level thereof is lowered as the collector 625 extends toward the cover water channel 65, the water collector 625 may minimize water leakage to the outside of the cover water channel 65 while stably guiding the water toward the cover water channel 65.

Further, the second protrusion 6573 may include a pair of protrusions. The cover water collector 625 may be disposed between the pair of the second protrusions. As described above, the cultivator may be formed symmetrically in a direction in which the cultivator extends, that is, a direction from one side to the opposite side thereof. Thus, even when the second protrusion 6573 is located to be closer to the supply than the first protrusion 6571 is, the cultivator 60 may have the same appearance as that when the first protrusion 6571 is closer to the supply than the second protrusion 6573. The first and second protrusions may perform the same function.

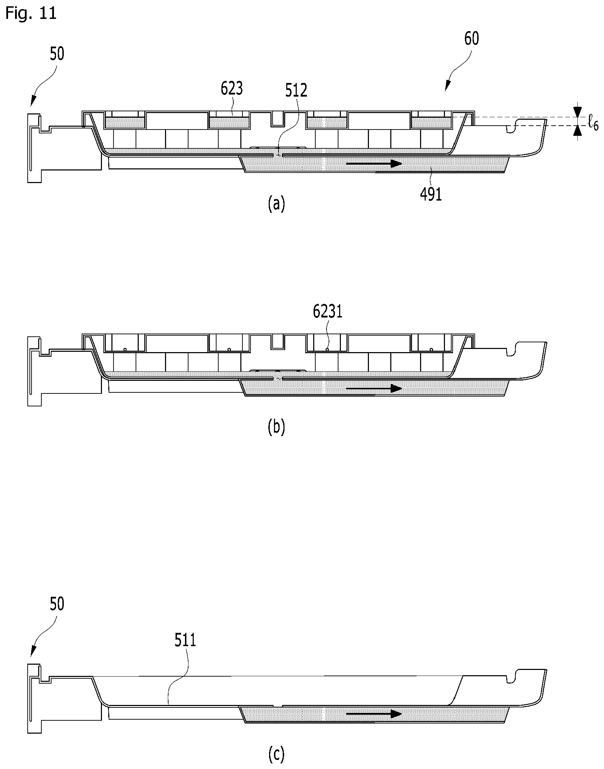

FIG. 11 is a side view showing a process in which water flows into and is discharged from the cultivator shown in FIG. 8 in the plant cultivation apparatus according to one embodiment of the present disclosure. Hereinafter, descriptions duplicate with those of the above-described structures will be omitted.

(a) and (b) in FIG. 11 are diagrams showing a process in which the water supplied to the cover water channel 65 is discharged to the water discharge channels 4911 and 4913 when the cultivator 60 including the cover water channel 65 is seated on the bed 50. Referring to (a) and (b) in FIG. 11, a flow path of water supplied from the supply in the cover water channel 65 is described.

As shown in (a) in FIG. 11, the supply channel may supply the water for the plant to the cover water collector 625 through the discharge hole 413 facing toward the cover water collector 625. In this case, a vertical level of the water supplied to the cover water channel 65 may be lower than or equal to a vertical level l6 of each of the second inflow hole 6575 and the cover water collector 625.

On the contrary, when the vertical level of the water supplied to the cover water channel 65 is higher than the vertical level l6 of each of the cover water collector 625 and the second inflow hole 6575, the water from the cover water channel 65 may be guided to the cultivation medium receiving space S2 through the second inflow hole 6575. At the same time, the water flowing into the cultivation medium receiving space S2 may be discharged to the water discharge channels 4911 and 4913 through the discharge hole 6135 of the cultivation vessel 61.

In one example, the water supplied to the cover water channel 65 may be supplied to the upper end of the cultivation medium 64 through the first inflow hole 6231. The vertical level of the water in the cultivation medium receiving space S2 may be lower than the vertical level of the cultivation medium hole 643, so that the condition in which the roots of the plant to breathe may be created. Due to this condition, the reliability of the growth of the plant may be improved.

As shown in (b) in FIG. 11, the water supply from the water supply 40 to the cultivator 60 is terminated, and an entire amount of the water received in the cover water channel 65 through the first inflow hole 6231 may be totally supplied to the cultivation medium 64.

In this connection, the first inflow hole 6231 may be adjacent to the bottom face 653 of the cover water channel 65, such that an entire amount of the water in the cover water channel 65 may be discharged through the first inflow hole 6231.

In one example, in this case, depending on the growth state of the plant, the water flowing into the cultivation medium receiving space S2 may stop being discharged to the water discharge channels 4911 and 4913 through the discharge hole 6135 of the cultivation vessel 61. Further, on the contrary, the water flowing into the cultivation medium receiving space S2 may be discharged to the water discharge channels 4911 and 4913 through the discharge hole 6135 of the cultivation vessel 61.

As shown in (c) in FIG. 11, the number of the supply channels corresponds to the number of the beds 50. Each supply channel is partially disposed above the cultivation vessel receiving portion 511. Thus, water may be supplied from the supply channel through the discharge hole 413 even when the harvest of the plant grown in the cultivator 60 has been finished or the cultivator 60 is separated from the bed 50.

In this case, the water supplied from the supply through the seat communication hole 512 defined in the bottom face of the cultivation vessel receiving portion 511 may be discharged to the water discharge channels 4911 and 4913 and may then be collected into the storage 43.

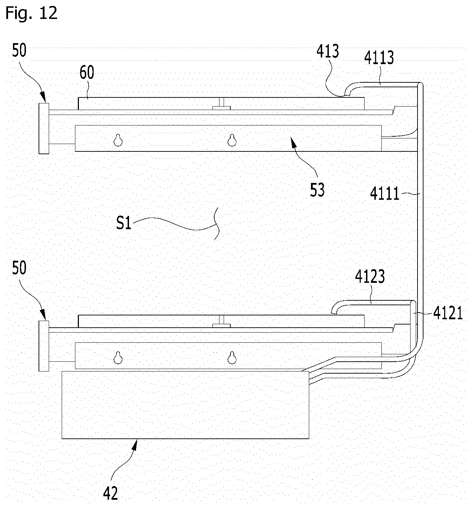

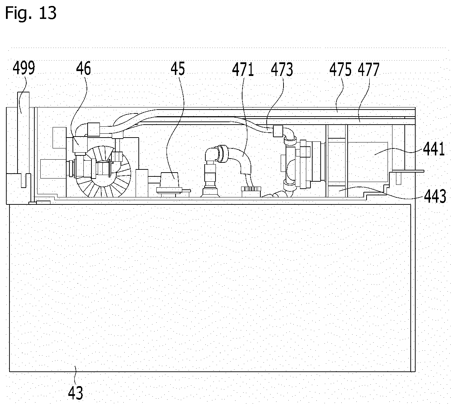

In one example, FIG. 12 is a side view showing the water supply in the plant cultivation apparatus according to one embodiment of the present disclosure. FIG. 13 is a top view of the inside of the water supply in the plant cultivation apparatus according to one embodiment of the present disclosure. Hereinafter, descriptions duplicate with those of the above-described structure will be omitted.

A cultivation space S1 in which a plant is cultivated may be defined between the upper bed 50 of the plurality of beds and the lower bed 50 thereof.

Further, the water supply may include the first supply channel 411 that supplies water to the cover water channel 65 of the upper bed 50 of the plurality of bed 50 and the second supply channel 412 that supplies water to the cover water channel 65 of the lower bed 50 of the plurality of bed 50.

Further, each of the first supply channel 411 and the second supply channel 412 is disposed independently and extends to face toward the cultivator 60 to supply water necessary for plant growth thereto.

The first supply channel 411 may include a first supply flow channel 4111 connected to the storage 43 and extending upwardly, and acing as a passage through which water from the storage 43 flows upwards, and a plurality of first supply branch channels 4113 branching from the first supply flow channel 4111 and extending towards the cover water channel 65 of the cultivator 60.

The second supply channel 412 may include a second supply flow channel 4121 connected to the storage 43 and extending upwardly, and acing as a passage through which water from the storage 43 flows upwards, and a plurality of second supply branch channels 4123 branching from the second supply flow channel 4121 and extending towards the cover water channel 65 of the cultivator 60.

As shown in FIG. 13, the water supply 40 may include the storage 43 in which the water supplied to the plant is stored, and the supply pump 44 connected to the storage 43 and configured to pump the water of the storage 43 to the supply. Further, the water supply 40 may include a discharger that is connected to the storage and includes the water discharge channels 4911 and 4913 for collection of water inside the cultivator 60.

That is, the water supply casing 42 may be disposed below the lower bed 50, and may receive therein the storage 43, the supply pump 44, the flow sensor 45, the branching valve 46, and the connective channel 47.

The water supply 40 may include the water supply casing 42, the components positioned inside the water supply casing, and pipes connected to these components.

The storage 43 may be retractable and extendable in frontward and rearward directions and may be disposed inside the cabinet 10, and may have a separable structure. Therefore, the water may be easily supplied to the storage 43. The user may easily clean and maintain the storage 43.

Further, the water supply casing 42 may have an inner space for receiving the connective channel 47, the supply pump 44, the flow sensor 45, the branching valve 46, and the like.

The supply pump 44 may include a pump 441 configured to pump water to the supply channel and a pump support 443 securing the pump 441 to the cabinet.

Further, in the storage 43, the nutrient liquid required for the plant may be stored. Water from the storage may be supplied to the supply channel through a first connective channel 471 connected to the pump 441 of the supply pump 44.

Further, the flow sensor 45 detects the flow rate of supplied water, and prevents the water from overflowing out of the cultivator 60 due to excessive water supply thereto. Further, the amount of the water supplied to the cultivator 60 may be controlled based on the quantitative water supply through the flow sensor 45. Thus, an optimal amount of water to each plant growth stage may be fed to the cultivator 60. This may prevent excessive moisture from being stored in the cultivator 60. This allows the cultivator 60 to be kept clean at all times. Adequate humidity in the bed 50 and the cultivation space S1 may be maintained.

In one example, the branching valve 46 may be opened when the pump 441 is activated so that the water may be supplied toward the supply channel. The branching valve 46 may be connected to a plurality of connective channels respectively connected to the plurality of channels of the supply channel respectively corresponding to the plurality of the beds.

That is, as shown in the drawing, the branching valve 46 may be connected to a third connective channel 475 connected to the first supply channel 411 and a fourth connective channel 477 connected to the second supply channel 412.

The storage 43 and the pump 441 may be connected to each other via the first connective channel 471. The pump 441 and the branching valve 46 may be connected to each other via the second connective channel 473.

Further, the water discharged from the second connective channel 473 may flow to each of the third connective channel 475 and the fourth connective channel 477 via the branching valve 46. The water may be supplied to each of the first supply channel 411 and the second supply channel 412.

That is, under the operation of the pump 441, the water of the storage 43 may be supplied to the cultivator 60 or the bed 50 through the branching valve 46.

In one example, the water supply 40 may include the discharger constructed so that the water discharged from the cultivator 60 is collected into the discharger which supplies the collected water into the storage 43. The discharger may include a discharger collection channel 499 connected to the storage 43. The discharger collection channel 499 may be constructed to be connected to the storage 43 so that water from a discharger connective channel 493 to be described later is collected into the discharger collection channel 499.

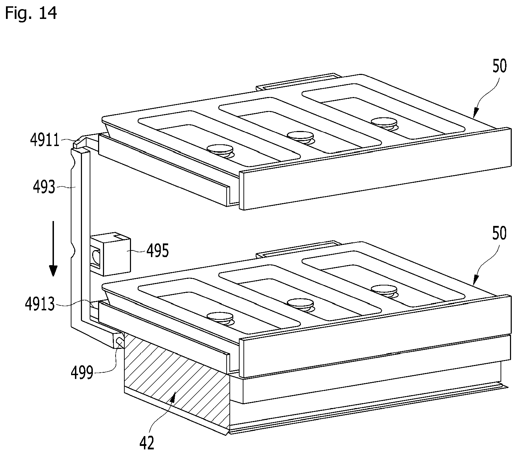

In one example, FIG. 14 is a perspective view showing a bed and a discharger in the plant cultivation apparatus according to an embodiment of the present disclosure. Hereinafter, descriptions duplicate with those of the above-described structure will be omitted.

The discharger may include the water discharge channels 4911 and 4913 which communicate with the seat communication hole 512 of the bed 50 and collect the water of the cultivation medium receiving space S2. The water discharge channels 4911 and 4913 may be defined in the bed 50. The water discharge channels 4911 and 4913 may include the first discharge channel 4911 defined in the upper bed 50 and the second discharge channel 4913 defined in the lower bed 50.

The discharger may include the discharger connective channel 493 for connecting the discharger collection channel 499 to the water discharge channels 4911 and 4913. The collected water may flow in and along the discharger connective channel 493. The discharger connective channel 493 may extend vertically. The first discharge channel 4911 and the second discharge channel 4913 may be constructed to be connected to the discharger connective channel 493.

In one example, the discharger may include a discharger pump 495 that is connected to the discharger connective channel 493 and pumps the water collected in the discharger connective channel 493 to the storage 43.

Further, when the discharger pump 495 is activated, the water of the cultivation medium receiving space S2 may be collected into the discharger. When the operation of the discharge pump unit 495 is deactivated, the water in the cultivation medium receiving space S2 may not be collected into the discharger.

At least a portion of the discharger collection channel 499 connecting the discharger connective channel 493 with the storage 43 may be disposed inside the water supply casing 42 and may be connected to the storage 43.

## Claims

1. A plant cultivation apparatus (1) comprising:
a cabinet (10);
a bed (50) disposed in the cabinet;
a cultivator (60) seated on the bed, the cultivator configured to receive therein a cultivation medium (64) in which at least a portion of a plant is received, and wherein the cultivator (60) comprises a cultivation vessel (61) seated on the bed (50) and having an open top, and a cover (62) shielding the open top of the cultivation vessel;
a cover water channel (65) defined in a top face of the cover (62) and configured to receive therein water to be supplied to the plant; and
a water supply (40) disposed inside the cabinet, wherein at least a portion of the water supply is located above the cover water channel to supply water to the cover water channel,
wherein the cover (62) further includes a cultivation medium receiving portion (623) protruding upwardly from a bottom face (653) of the cover water channel (65) and accommodating the upper end of the cultivation medium (64) therein, and
wherein the cover water channel (65) communicates with an inside of the cultivator through the cultivation medium receiving portion (623) and is configured to guide water supplied from the water supply (40) thereto to the cultivation medium.

2. The apparatus of claim 1, wherein the cover water channel (65) overlaps with at least portion of the cultivation medium receiving portion (623),
wherein the cultivation medium receiving portion (623) has a first inflow hole (6231) defined therein, the first inflow hole configured to supply water from the cover water channel (65) through the first inflow hole to the cultivation medium.

3. The apparatus of claim 2, wherein the cover water channel includes:
a first cover water channel (6551) extending from one side of the cover to the other side thereof; and
a second cover water channel (6553) branching from the first cover water channel,
wherein the cultivation medium receiving portion includes a plurality of cultivation medium receiving portions,
wherein the plurality of cultivation medium receiving portions are disposed in the first cover water channel and the second cover water channel.

4. The apparatus of claim 2 or 3, wherein the cultivation medium receiving portion (623) is positioned within the cover water channel (65) in a manner to be surrounded with water received in the cover water channel, wherein the first inflow hole (6231) is disposed at a circumference of the cultivation medium receiving portion.

5. The apparatus of claim 4, wherein the cultivation medium receiving portion is configured for insertion of the cultivation medium into the cultivation medium receiving portion so that the cultivation medium is brought into contact with an inner face of the cultivation medium receiving portion,
wherein the first inflow hole is defined in the inner face to guide water received in the cover water channel to the cultivation medium.

6. The apparatus of claim 4 or 5, at least one of the following applies:
the first inflow hole is positioned so as to be in contact with a bottom face of the cover water channel; and
a portion of a sidewall of the cover water channel facing toward the cultivation medium receiving portion is horizontally recessed so as be away from the cultivation medium receiving portion.

7. The apparatus of any one of claims 2 to 6, wherein the cover water channel includes a second inflow hole (6575) communicating with the inside of the cultivation vessel,
wherein a cover through-hole (6233) through which the plant grows and extends is defined in a top face of the cultivation medium receiving portion,
wherein a vertical level of the second inflow hole is lower than a vertical level of the cover through-hole such that water in the cover water channel is prevented from flowing into the cover through-hole.

8. The apparatus of claim 7, wherein the cover water channel includes a protrusion (6571, 6573) protruding upward from a bottom face of the cover water channel,
wherein the second inflow hole is defined in a top face of the protrusion.

9. The apparatus of claim 8, wherein the protrusion includes at least one protrusion,
wherein the at least one protrusion includes a first protrusion (6571) located at one side of the cover, wherein the first protrusion is located closer to the water supply than the cultivation medium receiving portion,
wherein optionally the at least one protrusion further includes a second protrusion located at the other side of the cover.

10. The apparatus of any one of claims 7 to 9, wherein a vertical level of the second inflow hole is lower than a vertical level of a top face of the cover.

11. The apparatus of claim 9, wherein the water supply includes a discharge hole configured to discharge water through the discharge hole to the cover water channel,
wherein the cover includes a water collector (625) located below the discharge hole, wherein the water collector is configured to receive water discharged from the discharge hole and deliver the received water to the cover water channel.

12. The apparatus of claim 11, wherein at least one of the following applies:
the first protrusion is provided in a pair, wherein the water collector is positioned between the pair of the first protrusions; and
the cultivator further includes an indicator covering a top face of the cover and configured to expose the water collector to an outside.

13. The apparatus of any one of claims 1 to 12, wherein the cultivation vessel has a discharge hole defined therein through which water in the vessel can be discharged to the bed,
wherein the bed has a water discharge channel (4911, 4913) defined therein for collecting water discharged from the discharge hole and guiding the collected water to the water supply,
wherein optionally the water supply includes: a storage for storing therein water to be supplied to the plant, and a supply channel connected to the storage and extending to a location above the cover water channel for supplying water to the cover water channel, wherein the water discharge channel is connected to the storage so that water discharged through the discharge hole is collected into the storage.

## Patentansprüche

1. Vorrichtung (1) zur Kultivierung von Pflanzen, umfassend:
einen Schrank (10);
ein in dem Schrank angeordnetes Beet (50);
einen Kultivator (60), der auf dem Beet sitzt, wobei der Kultivator dazu eingerichtet ist, ein Kultivierungsmedium (64) aufzunehmen, in dem mindestens ein Teil einer Pflanze aufgenommen wird, und wobei der Kultivator (60) einen Kultivierungsbehälter (61), der auf dem Beet (50) sitzt und eine offene Oberseite aufweist, sowie eine Abdeckung (62), die die offene Oberseite des Kultivierungsbehälters abschirmt, umfasst;
einen Abdeckungswasserkanal (65), der in einer Oberseite der Abdeckung (62) definiert ist und dazu eingerichtet ist, Wasser aufzunehmen, das der Pflanze zugeführt werden soll; und
eine Wasserversorgung (40), die innerhalb des Gehäuses angeordnet ist, wobei sich mindestens ein Teil der Wasserversorgung über dem Abdeckungswasserkanal befindet, um Wasser an den Abdeckungswasserkanal zu liefern,
wobei die Abdeckung (62) ferner einen Kultivierungsmedium-Aufnahmeabschnitt (623) umfasst, der von einer Unterseite (653) des Abdeckungswasserkanals (65) nach oben vorsteht und das obere Ende des Kultivierungsmediums (64) darin aufnimmt, und
wobei der Abdeckungswasserkanal (65) über den Kultivierungsmedium-Aufnahmeabschnitt (623) mit dem Inneren des Kultivators in Verbindung steht und dazu eingerichtet ist, das von der Wasserversorgung (40) zugeführte Wasser zu dem Kultivierungsmedium zu leiten.

2. Vorrichtung nach Anspruch 1, wobei der Abdeckungswasserkanal (65) mindestens einen Teil des Kultivierungsmedium-Aufnahmeabschnitts (623) überlappt,
wobei der Kultivierungsmedium-Aufnahmeabschnitt (623) eine erste Einströmöffnung (6231) aufweist, die dazu eingerichtet ist, Wasser aus dem Abdeckungswasserkanal (65) durch die erste Einströmöffnung dem Kultivierungsmedium zuzuführen.

3. Vorrichtung nach Anspruch 2, wobei der Abdeckungswasserkanal umfasst:
einen ersten Abdeckungswasserkanal (6551), der sich von einer Seite der Abdeckung zur anderen Seite derselben erstreckt; und
einen zweiten Abdeckungswasserkanal (6553), der vom ersten Abdeckungswasserkanal abzweigt,
wobei der Kultivierungsmedium-Aufnahmeabschnitt eine Mehrzahl von Kultivierungsmedium-Aufnahmeabschnitten umfasst,
wobei die Mehrzahl von Kultivierungsmedium-Aufnahmeabschnitten im ersten Abdeckungswasserkanal und im zweiten Abdeckungswasserkanal angeordnet sind.

4. Vorrichtung nach Anspruch 2 oder 3, wobei der Kultivierungsmedium-Aufnahmeabschnitt (623) innerhalb des Abdeckungswasserkanals (65) so positioniert ist, dass er von dem im Abdeckungswasserkanal aufgenommenen Wasser umgeben ist, wobei die erste Einströmöffnung (6231) an einem Umfang des Kultivierungsmedium-Aufnahmeabschnitts angeordnet ist.

5. Vorrichtung nach Anspruch 4, wobei der Kultivierungsmedium-Aufnahmeabschnitt dazu eingerichtet ist, dass Kultivierungsmedium in den Kultivierungsmedium-Aufnahmeabschnitt einzuführen, sodass das Kultivierungsmedium mit einer Innenfläche des Kultivierungsmedium-Aufnahmeabschnitts in Kontakt gebracht wird,
wobei die erste Einströmöffnung in der Innenfläche definiert ist, um das in dem Abdeckungswasserkanal aufgenommene Wasser zu dem Kultivierungsmedium zu leiten.

6. Vorrichtung nach Anspruch 4 oder 5, wobei mindestens einer der folgenden Punkte zutrifft:
die erste Einströmöffnung ist so positioniert, dass sie mit einer Unterseite des Abdeckungswasserkanals in Kontakt steht; und
ein Abschnitt einer Seitenwand des Abdeckungswasserkanals, der zum Kultivierungsmedium-Aufnahmeabschnitt hin ausgerichtet ist, ist horizontal vertieft, sodass er vom Kultivierungsmedium-Aufnahmeabschnitt entfernt ist.

7. Vorrichtung nach einem der Ansprüche 2 bis 6, wobei der Abdeckungswasserkanal ein zweites Einströmloch (6575) aufweist, das mit dem Inneren des Kultivierungsbehälters in Verbindung steht,
wobei eine Abdeckungsdurchgangsöffnung (6233), durch die die Pflanze wächst und sich ausdehnt, in einer Oberseite des Kultivierungsmedium-Aufnahmeabschnitts definiert ist,
wobei die vertikale Höhe der zweiten Einströmöffnung niedriger ist als die vertikale Höhe der Abdeckungsdurchgangsöffnung, so dass verhindert wird, dass Wasser aus dem Abdeckungswasserkanal in die Abdeckungsdurchgangsöffnung fließt.

8. Vorrichtung nach Anspruch 7, wobei der Abdeckungswasserkanal einen Vorsprung (6571, 6573) aufweist, der von einer Unterseite des Abdeckungswasserkanals nach oben vorsteht,
wobei die zweite Einströmöffnung in einer Oberseite des Vorsprungs definiert ist.

9. Vorrichtung nach Anspruch 8, wobei der Vorsprung mindestens einen Vorsprung umfasst,
wobei der mindestens eine Vorsprung einen ersten Vorsprung (6571) umfasst, der sich an einer Seite der Abdeckung befindet, wobei der erste Vorsprung näher an der Wasserversorgung als der Kultivierungsmedium-Aufnahmeabschnitt angeordnet ist,
wobei optional der mindestens eine Vorsprung ferner einen zweiten Vorsprung umfasst, der sich auf der anderen Seite der Abdeckung befindet.

10. Vorrichtung nach einem der Ansprüche 7 bis 9, wobei eine vertikale Ebene der zweiten Einströmöffnung niedriger ist als eine vertikale Ebene einer Oberseite der Abdeckung.

11. Vorrichtung nach Anspruch 9, wobei die Wasserversorgung eine Auslassöffnung umfasst, die dazu eingerichtet ist, Wasser durch die Auslassöffnung in den Abdeckungswasserkanal abzugeben,
wobei die Abdeckung einen Wassersammler (625) umfasst, der sich unterhalb der Auslassöffnung befindet, wobei der Wassersammler dazu eingerichtet ist, aus der Auslassöffnung abgegebenes Wasser aufzunehmen und das aufgenommene Wasser an den Abdeckungswasserkanal weiterzuleiten.

12. Vorrichtung nach Anspruch 11, wobei mindestens einer der folgenden Punkte zutrifft:
der erste Vorsprung in einem Paar vorgesehen ist, wobei der Wassersammler zwischen dem Paar der ersten Vorsprünge positioniert ist; und
der Kultivator umfasst ferner eine Anzeige, die eine Oberseite der Abdeckung bedeckt und dazu eingerichtet ist, den Wassersammler nach außen freizulegen.

13. Vorrichtung nach einem der Ansprüche 1 bis 12, wobei der Kultivierungsbehälter eine darin definierte Auslassöffnung aufweist, durch die Wasser im Behälter in das Beet abgelassen werden kann,
wobei das Beet einen darin ausgebildeten Wasserablaufkanal (4911, 4913) aufweist, um aus der Auslassöffnung abgelassenes Wasser zu sammeln und das gesammelte Wasser zur Wasserversorgung zu leiten,
wobei die Wasserversorgung optional umfasst: einen Speicher zum Speichern von Wasser, das der Pflanze zugeführt werden soll, und einen Versorgungskanal, der mit dem Speicher verbunden ist und sich zu einer Stelle oberhalb des Abdeckungswasserkanals erstreckt, um Wasser dem Abdeckungswasserkanal zuzuführen, wobei der Wasserablaufkanal mit dem Speicher verbunden ist, so dass sich durch die Ablauföffnung abgelassenes Wasser im Speicher sammelt.

## Revendications

1. Appareil de culture de plantes (1) comprenant:
un caisson (10);
une plate-bande (50) disposé dans le caisson;
un cultivateur (60) posé sur le plate-bande, le cultivateur étant conçu pour recevoir un milieu de culture (64) dans lequel est reçue au moins une partie d'une plante, et le cultivateur (60) comprenant un récipient de culture (61) posé sur le plate-bande (50) et ayant une partie supérieure ouverte, et un couvercle (62) protégeant la partie ouverte du récipient de culture;
un canal d'eau de couvercle (65) formé dans une face supérieure du couvercle (62) et conçu pour recevoir l'eau destinée à la plante; et
une alimentation en eau (40) disposée à l'intérieur du caisson, au moins une partie de l'alimentation en eau étant située au-dessus du canal d'eau du couvercle afin d'alimenter en eau le canal d'eau du couvercle,
dans lequel le couvercle (62) comprend en outre une partie de réception (623) du milieu de culture faisant saillie vers le haut à partir d'une face inférieure (653) du canal d'eau du couvercle (65) et logeant en son sein l'extrémité supérieure du milieu de culture (64), et
dans lequel le canal d'eau du couvercle (65) communique avec l'intérieur du cultivateur au moyen de la partie de réception (623) du milieu de culture et est conçu pour guider l'eau fournie par l'alimentation en eau (40) vers le milieu de culture.

2. Appareil selon la revendication 1, dans lequel le canal d'eau de couvercle (65) chevauche au moins une partie de la partie de réception (623) du milieu de culture,
la partie de réception (623) du milieu de culture comportant un premier trou d'entrée (6231) pratiqué en son sein, le premier trou d'entrée étant conçu pour alimenter en eau, le milieu de culture, provenant du canal d'eau de couvercle (65) à travers le premier trou.

3. Appareil selon la revendication 2, dans lequel le canal d'eau de couvercle comprend:
un premier canal d'eau de couvercle (6551) s'étendant de chaque côté du couvercle; et
un deuxième canal d'eau de couvercle (6553) bifurquant à partir du premier canal d'eau de couvercle,
dans lequel la partie de réception du milieu de culture comprend une pluralité de parties de réception du milieu de culture,
dans lequel la pluralité de parties de réception du milieu de culture sont disposées dans le premier canal d'eau de couvercle et le deuxième canal d'eau de couvercle.

4. Appareil selon la revendication 2 ou 3, dans lequel la partie de réception (623) du milieu de culture est positionnée à l'intérieur du canal d'eau de couvercle (65) de manière à être entourée par l'eau reçue dans le canal d'eau de couvercle, dans lequel le premier trou d'entrée (6231) est pratiqué à la circonférence de la partie de réception du milieu de culture.

5. Appareil selon la revendication 4, dans lequel la partie de réception du milieu de culture est conçue pour l'insertion du milieu de culture dans la partie de réception du milieu de culture de manière à ce que le milieu de culture soit mis en contact avec une face interne de la partie de réception du milieu de culture,
dans lequel le premier trou d'entrée est pratiqué dans la face interne pour guider l'eau reçue dans le canal d'eau de couvercle vers le milieu de culture.

6. Appareil selon la revendication 4 ou 5, dans lequel au moins l'une des conditions suivantes s'applique:
le premier trou d'entrée est positionné de manière à être en contact avec une face inférieure du canal d'eau de couvercle; et
une partie d'une paroi latérale du canal d'eau de couvercle faisant face à la partie de réception du milieu de culture est évidée horizontalement de manière à être éloignée de la partie de réception du milieu de culture.

7. Appareil selon l'une quelconque des revendications 2 à 6, dans lequel le canal d'eau de couvercle comprend un deuxième trou d'entrée (6575) communiquant avec l'intérieur du récipient de culture,
dans lequel un trou traversant (6233) du couvercle à travers lequel la plante pousse et s'étend est formé dans une face supérieure de la partie de réception du milieu de culture,
dans lequel le niveau vertical du deuxième trou d'entrée est inférieur au niveau vertical du trou traversant du couvercle, de sorte que l'eau contenue dans le canal d'eau du couvercle ne puisse pas s'écouler dans le trou traversant du couvercle.

8. Appareil selon la revendication 7, dans lequel le canal d'eau du couvercle comprend une saillie (6571, 6573) faisant saillie vers le haut à partir d'une face inférieure du canal d'eau du couvercle,
dans lequel le deuxième trou d'entrée est formé dans une face supérieure de la saillie.

9. Appareil selon la revendication 8, dans lequel la saillie comprend au moins une saillie,
dans lequel l'au moins une saillie comprend une première saillie (6571) située sur un côté du couvercle, la première saillie étant située plus près de l'alimentation en eau que la partie de réception du milieu de culture,
dans lequel, éventuellement, l'au moins une saillie comprend en outre une deuxième saillie située de l'autre côté du couvercle.

10. Appareil selon l'une quelconque des revendications 7 à 9, dans lequel le niveau vertical du deuxième trou d'entrée est inférieur au niveau vertical d'une face supérieure du couvercle.

11. Appareil selon la revendication 9, dans lequel l'alimentation en eau comprend un trou d'évacuation conçu pour évacuer l'eau par le trou d'évacuation vers le canal d'eau du couvercle,
dans lequel le couvercle comprend un collecteur d'eau (625) situé sous le trou d'évacuation, le collecteur d'eau étant conçu pour recevoir l'eau évacuée par le trou d'évacuation et acheminer l'eau reçue vers le canal d'eau du couvercle.

12. Appareil selon la revendication 11, dans lequel au moins l'une des conditions suivantes s'applique:
la première saillie est fournie par deux, le collecteur d'eau est positionné entre les deux premières saillies; et
le cultivateur comprend en outre un indicateur recouvrant une face supérieure du couvercle et conçu pour rendre visible le collecteur d'eau de l'extérieur.

13. Appareil selon l'une quelconque des revendications 1 à 12, dans lequel le récipient de culture comporte un trou d'évacuation pratiqué en son sein à travers lequel l'eau dans le récipient peut être évacuée vers le plate-bande,
dans lequel le plate-bande comporte un canal d'évacuation d'eau (4911, 4913) formé en son sein pour collecter l'eau évacuée par l'orifice d'évacuation et guider l'eau collectée vers l'alimentation en eau,
dans lequel, éventuellement, l'alimentation en eau comprend: un réservoir servant à stocker l'eau destinée à la plante, et un canal d'alimentation relié au réservoir et s'étendant jusqu'à un emplacement situé au-dessus du canal d'eau du couvercle pour aliment en eau le canal d'eau du couvercle, le canal d'évacuation d'eau étant relié au réservoir de sorte que l'eau évacuée par le trou d'évacuation soit collectée dans le réservoir.
